# EUROPÄISCHE PATENTSCHRIFT

(11) **EP 2 437 426 B1**
(45) Veröffentlichungstag und Bekanntmachung des Hinweises auf die Patenterteilung: **22.07.2015**
(21) Anmeldenummer: 10013254.7
(22) Anmeldetag: 04.10.2010
(51) Int. Cl.: H04L 7/00, G06F 13/42, G08C 19/28

(54) **Verfahren zur seriellen Datenübertragung von einem Slave zu einem Master einer Messwert-Übertragungsanordnung und Vorrichtungen zur Durchführung der Verfahren**
Method for serial data transfer from a slave to a master of a measurement value transfer assembly and device for executing the method
Procédé de transmission de données sérielle d'un esclave vers un maître d'un agencement de transmission de valeur de mesure et dispositifs d'exécution du procédé

(43) Veröffentlichungstag der Anmeldung: 04.04.2012
(73) Patentinhaber: BALLUFF GmbH, 73765 Neuhausen (DE)
(72) Erfinder: Hahn, Uwe, 73732 Esslingen (DE)
(74) Vertreter: Jakelski, Joachim

(56) Entgegenhaltungen:
- DE-A1- 10 358 974
- JP-A- 58 114 543
- US-A- 4 816 996
- US-A- 5 367 534
- US-A1- 2002 133 662
- US-A1- 2009 137 318

## Beschreibung

Die Erfindung geht aus von Verfahren zur seriellen Datenübertragung von einem Slave zu einem Master einer Messwert-Übertragungsanordnung und von Vorrichtungen zur Durchführung der Verfahren, bei welchen ein von einem Sensor erfasster Messwert in einem dem Sensor zugeordneten Slave aufbereitet sowie in einen seriellen Datenstrom umgesetzt und zu einem Master übertragen wird, der die erfassten Messwerte verarbeitet.

Eine derartige Messwert-Übertragungsanordnung ist in der EP-Patentschrift 171 579 B1 beschrieben, die aufgrund der Arbeitsweise als "Synchronous Serial Interface SSI" bezeichnet wird. Die Messwert-Übertragungsanordnung enthält einen Master sowie mindestens einen Slave. Die Slaves sind den Sensoren zugeordnet, wobei einem Slave gegebenenfalls mehrere Sensoren zugeordnet sein können. Die von einem Sensor erfassten Messwerte werden vom Sensor bereits in digitaler Form als Datenbits bereitgestellt. Die Datenbits werden im Slave im Rahmen eines Parallelbetriebs laufend in ein Schieberegister geladen. Das Schieberegister kann die Datenbits des Messwerts in Parallelbetrieb speichern und anschließend in einem Seriellbetrieb zur seriellen Datenübertragung bereitstellen. Während des Parallelbetriebs können in Abhängigkeit von der Anlieferungsrate der Messwerte beziehungsweise Datenbits vom Sensor zahlreiche Messwerte im Schieberegister hinterlegt und wieder durch aktuellere, neu erfasste Messwerte ersetzt werden, ohne dass ein Messwert gespeichert und seriell zum Master übertragen wird.

Der Master, in welchem die Verarbeitung und Bewertung der die Messwerte widerspiegelnden Datenbits stattfindet, fordert die Datenbits eines Messwerts im Rahmen eines Taktbursts von einem ausgewählten Slave an. Der Taktburst weist eine festgelegte Anzahl von Taktzyklen auf. Die Anzahl der Taktzyklen ist sowohl dem Slave als auch dem Master bekannt. Die erste vom Slave erkannte vorgegebene Taktflanke, beispielsweise die erste fallende Taktflanke, triggert eine monostabile Kippstufe, deren Ausgangssignal das Schieberegister vom Parallelbetrieb in den Seriellbetrieb umschaltet. Gleichzeitig werden mit der ersten Taktflanke die parallel anliegenden Datenbits eines Messwerts, welche den erfassten Messwert zu diesem Zeitpunkt widerspiegeln, im Schieberegister gespeichert und zur seriellen Datenübertragung bereitgestellt.

Mit jeder weiteren vorgegebenen Taktflanke, beispielsweise jeder fallenden Taktflanke, wird ein Datenbit des Messwerts vom Slave zum Master übertragen. Weiterhin (re)triggert jede fallende Taktflanke-die monostabile Kippstufe. Die Anzahl der Taktzyklen ist genau auf die Anzahl der zu übertragenden Datenbits abgestimmt Für eine Anzahl von n zu übertragenden Datenbits werden n+1 Taktzyklen vom Master innerhalb eines Taktbursts ausgegeben.

Nach der Übertragung des letzten Datenbits des Messwerts sorgt das Ausgangssignal der monostabilen Kippstufe noch bis zum Ablauf der von der retriggerbaren monostabilen Kippstufe vorgegebenen Zeit dafür, dass die Datenleitung auf einem vorgegebenen Datensignalpegel gehalten wird, indem das Schieberegister hoch für die Monoflop-Zeit im Seriellbetrieb verbleibt. Damit wird eine Wartezeit definiert. Der Master erkennt den vom Slave während der Wartezeit gehaltenen Datensignalpegel und fordert erst nach Ablauf der Wartezeit den betreffenden Slave zur Übertragung der Datenbits eines neuen Messwerts auf.

Die bekannte Messwert-Übertragungsanordnung setzt voraus, dass sämtliche Slaves auf die vom Master vorgegebene Anzahl n+1 von Taktzyklen eines Taktbursts abgestimmt sind. Die Anzahl der zu übertragenden Datenbits eines Messwerts ist daher festgelegt.

Die Patentschrift US 5 367 534 A beschreibt ein Modem, welches Daten von einem Terminal anfordert und weiter überträgt. Die Anforderung der Daten erfolgt mittels eines Taktsignals, welches das Modem dem Terminal zuführt. Das Modem greift mit dem Taktsignal ein, wenn der interne Datenpuffer des Modems voll ist. Eine Adaption von zu übertragenden Datenbits eines Sensorwerts ist nicht vorgesehen.

Der Erfindung liegt die Aufgabe zugrunde, Verfahren zur seriellen Datenübertragung von einem Slave zu einem Master einer Messwert-Übertragungsanordnung und Vorrichtungen zur Durchführung der Verfahren anzugeben, die flexibel im Hinblick auf die Anzahl der zu übertragenden Datenbits eines Messwerts sind.

Die Aufgabe wird durch die in den unabhängigen Ansprüchen angegebenen Merkmale jeweils gelöst.

### Offenbarung der Erfindung

Ein erfindungsgemäßes Verfahren geht von einer seriellen Datenübertragung aus, bei welcher die Datenbits des von einem Sensor erfassten Messwerts von einem dem Sensor zugeordneten Slave zu einem Master übertragen wird. Der Slave stellt den Messwert zur bitweisen seriellen Übertragung zum Master bereit. Der Master fordert einen Messwert vom Slave mittels eines, mehrere Taktzyklen aufweisenden Taktbursts an. Hierbei sind die Anzahl der Taktzyklen eines Taktbursts und die Anzahl der zu übertragenden Datenbits aufeinander abgestimmt.

Gemäß einer ersten Ausführungsform des erfindungsgemäßen Verfahrens ist vorgesehen, dass die Anzahl der zu übertragenden Datenbits eines Messwerts im Slave auf die vom Master vorgegebene Anzahl mittels der vom Master vorgegebenen Anzahl von Taktzyklen innerhalb eines Taktbursts adaptiv ermittelt und festgelegt wird.

Gemäß einer anderen Ausführungsform des erfindungsgemäßen Verfahrens ist vorgesehen, dass die Anzahl der zu übertragenden Datenbits eines Messwerts im Slave festgelegt ist und dass der Master die Anzahl der zur Übertragung der vorgegebenen Anzahl von Datenbits erforderliche Anzahl von Taktzyklen in einem Taktburst adaptiert.

Die Adaption kann nur zielgerichtet erfolgreich verlaufen, wenn entweder der Master auf eine fest vorgegebene Anzahl von Taktzyklen eines Taktbursts oder der Slave auf eine fest vorgegebene Anzahl von zu übertragenden Datenbits eingestellt sind.

Mit den erfindungsgemäßen Vorgehensweisen reduziert sich die Typenvielfalt der vom Hersteller für unterschiedliche Anzahlen von Datenbits von Messwerten zu produzierenden Master beziehungsweise Slaves. Entsprechend reduzieren sich Entwicklungsaufwand, Fertigungskosten und Kosten für die Lagerhaltung erheblich, ohne dass damit eine Einschränkung des Angebots für die Kunden hinzunehmen wäre. Der Kunde erhält einen entsprechenden Vorteil dadurch, dass er nur entweder bestimmte Slaves und einen beliebigen Master oder insbesondere nur einen bestimmten Master und beliebige Slaves einsetzen kann.

Vorteilhafte Ausgestaltungen und Weiterbildungen der erfindungsgemäßen Verfahren sind Gegenstände von abhängigen Ansprüchen.

Eine Ausgestaltung sieht vor, dass der Slave die Anzahl der Taktzyklen in einem Taktburst zählt und in Abhängigkeit vom Zählergebnis die Anzahl der zu übertragenden Datenbits festlegt. Mit dieser Maßnahme wird eine besonders einfache Möglichkeit geschaffen, die Adaption durchzuführen.

Eine Weiterbildung dieser Ausgestaltung sieht vor, dass der Slave die Anzahl der übertragenden Datenbits erst dann festlegt, wenn der Slave mehrfach dieselbe Anzahl von Taktzyklen eines Taktbursts ermittelt hat. Hiermit wird eine Plausibilisierung der ermittelten Anzahl über mehrere Taktbursts ermöglicht.

Eine andere Ausgestaltung sieht vor, dass der Slave von einer bestimmten vermuteten Anzahl von Taktzyklen eines Taktbursts ausgeht, dass das Auftreten von Taktflanken des Taktsignals von einem Timeout-Zeitgeber überwacht wird, dass bei einer Untertaktung, bei welcher der Master eine geringere Anzahl von Taktzyklen als vom Slave erwartet in einem Taktburst bereitstellt, aufgrund des Ausbleibens von wenigstens einer weiteren Taktflanke ein Timeout-Ereignis bereitgestellt und die Anzahl der erwarteten Taktzyklen im Slave bei einem Auftreten des Timeout-Ereignisses vermindert wird.

Entsprechend ist gemäß einer Ausgestaltung vorgesehen, dass der Slave von einer bestimmten vermuteten Anzahl von Taktzyklen eines Taktbursts ausgeht, dass das Auftreten von Taktflanken des Taktsignals von einem Übertaktungs-Zeitgeber überwacht wird, dass bei einer Übertaktung, bei welcher der Master eine höhere Anzahl von Taktzyklen als vom Slave erwartet in einem Taktburst bereitstellt, aufgrund der weiterhin auftretenden wenigstens einen Taktflanke ein Übertaktungs-Ereignis bereitgestellt und bei einem Auftreten eines Übertaktungs-Ereignisses die Anzahl der erwarteten Taktzyklen erhöht wird.

Mit diesen Maßnahmen werden demnach sowohl eine Untertaktung als auch eine Übertaktung erkannt und die Anzahl der zu übertragenden Datenbits kann an die Anzahl der Taktzyklen eines Taktbursts adaptiert werden.

Eine Ausgestaltung bei der Ermittlung einer Übertaktung sieht einen Übertaktungs-Ereigniszähler vor, der die über der erwarteten Anzahl von Taktzyklen liegende Anzahl von Taktzyklen eines Taktbursts zählt und die Anzahl der vom Master überzählig vorgegebenen Taktzyklen innerhalb eines Taktbursts ermittelt. Die Anzahl der zu übertragenden Datenbits kann dann sofort nach dem Vorliegen des Ergebnisses in einem Schritt adaptiert werden. Mit dieser Maßnahme wird die Adaption im Falle einer Übertaktung erheblich verkürzt.

Eine Ausgestaltung sieht vor, dass der Master die Taktzyklendauer variabel festlegt und dass der Slave die Taktzyklendauer mit einer Taktzyklendauer-Ermittlung ermittelt. Damit erhöht sich die Zahl der variablen Einstellmöglichkeiten.

Andere Ausgestaltungen betreffen die Zeitgeberzeiten des Timeout-Zeitgebers und/oder des Übertaktungs-Zeitgebers. So kann vorgesehen sein, dass die Zeitgeberzeiten in Abhängigkeit von der im Slave ermittelten Taktzyklendauer festgelegt werden. Die Zeitgeberzeiten können beispielsweise im Bereich von 1,5 bis 2,5 x der Taktzyklendauer liegen. Vorzugsweise werden die Zeitgeberzeiten auf 2 x der Taktzyklendauer festgelegt.

Eine Ausgestaltung sieht vor, dass der Slave im Anschluss an das Ende der Übertragung der Datenbits eine Wartezeit einfügt, während der das Datensignal auf einem vorgegebenen Signalpegel gehalten wird. Mit dieser Maßnahme wird dem Master signalisiert, dass der Slave noch nicht zu einer weiteren Übertragung eines Messwerts bereit ist.

Eine erfindungsgemäße Vorrichtung zur Durchführung des Verfahrens, bei welchem die Adaption im Slave stattfindet, sieht vor, dass der Slave eine Taktzyklen-Ermittlung enthält, welche die Anzahl der in einem Taktburst enthaltenen Taktzyklen zählt und die Anzahl der zu übermittelnden Datenbits bereitstellt. Damit kann die Adaption bereits nach einem Taktburst abgeschlossen werden.

Eine alternative erfindungsgemäße Vorrichtung zur Durchführung des Verfahrens, bei welchem die Adaption im Slave stattfindet, sieht im Slave einen Timeout-Zeitgeber zur Überwachung des Taktsignals auf Untertaktung und einen Übertaktungs-Zeitgeber zur Überwachung des Taktsignals auf Übertaktung sowie eine Taktzyklen-Ermittlung vor, die bei einer Untertaktung die Anzahl der zu übermittelnden Datenbits vermindert und entsprechend bei einer Übertaktung die Anzahl der zu übermittelnden Datenbits erhöht.

Eine Weiterbildung sieht im Slave einen Übertaktungs-Ereigniszähler vor, der die Anzahl aufeinanderfolgenden Übertaktungs-Ereignisses in einem Taktburst zählt, sodass die Adaption im Falle einer Übertaktung bereits nach einem Taktburst abgeschlossen werden kann. Der Slave ist damit in der Lage, seine Timeout-Zeiten dynamisch an den Master anzupassen.

Eine andere Weiterbildung sieht vor, dass der Slave eine Taktzyklendauer-Ermittlung zur Ermittlung der Periodendauer eines Taktzyklus des Taktsignals aufweist. Dadurch kann die Periodendauer des Taktsignals vom Master variabel vorgegeben werden.

Eine erfindungsgemäße Vorrichtung zur Durchführung des Verfahrens, bei welchem die Adaption im Master stattfindet, sieht vor, dass der Master eine Datensignalbewertung aufweist, welche die Dauer einer Wartezeit, während der das Datensignal auf einem Warte-Signalpegel gehalten wird, ermittelt und bewertet und anhand eines Vergleichs mit einer erwarteten Dauer die Anzahl der erforderlichen Taktzyklen eines Taktbursts festlegt.

Ausführungsbeispiele der Erfindung sind in der Zeichnung dargestellt und in der nachfolgenden Beschreibung näher erläutert.

### Kurzbeschreibung der Figuren

Figur 1 zeigt ein Blockschaltbild einer Messwert-Übertragungsanordnung mit einem Master und einem Slave,
Figur 2 zeigt einen grundlegenden Signalaustausch zwischen einem Master und einem Slave einer Messwert-Übertragungsanordnung,
Figur 3 zeigt einen Signalaustausch zwischen einem Master und einem Slave einer Messwert-Übertragungsanordnung, bei welcher dem Master die Anzahl der in einem Taktburst enthaltenen Taktzyklen und dem Slave die Anzahl von zu übertragenden Datenbits eines Messwerts bereits bekannt sind,
Figur 4 zeigt einen Signalaustausch zwischen einem Master und einem Slave einer Messwert-Übertragungsanordnung bei einer Untertaktung, bei welcher der Slave eine höhere Anzahl von Datenbits eines Messwerts annimmt als vom Master angefordert werden und
Figur 5 zeigt ein einen Signalaustausch zwischen einem Master und einem Slave einer Messwert-Übertragungsanordnung bei einer Übertaktung, bei welcher der Slave eine niedrigere Anzahl von Datenbits eines Messwerts annimmt als vom Master angefordert werden.

### Detaillierte Beschreibung der Ausführungsbeispiele

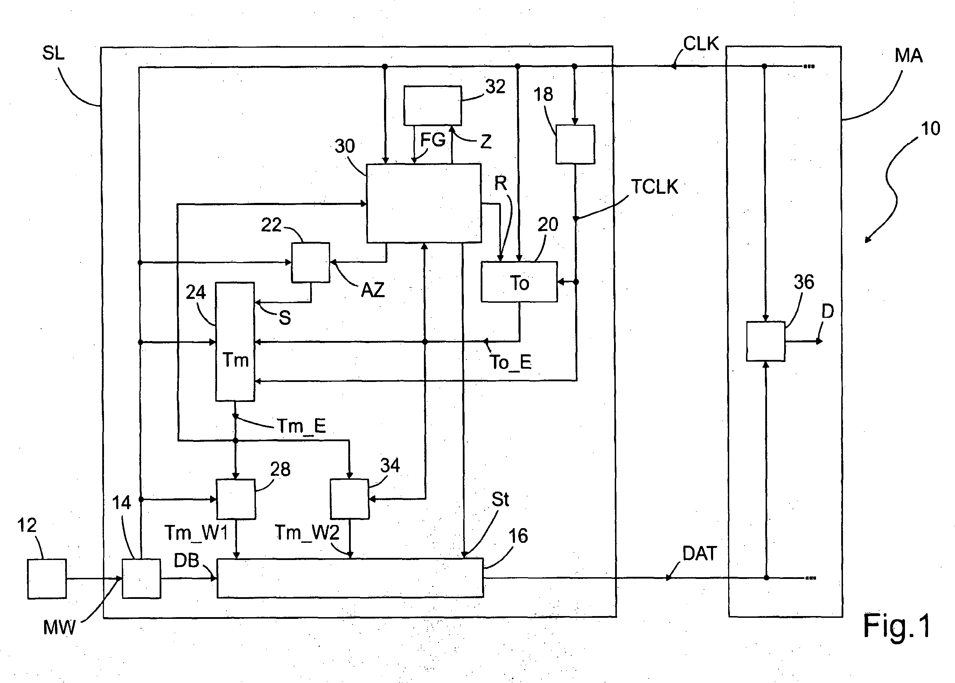

Figur 1 zeigt eine Messwert-Übertragungsanordnung 10, die einen Master MA und mindestens einen Slave SL enthält. Ein von einem Sensor 12 erfasster Messwert MW wird vom Sensor 12 entweder analog oder bereits digitalisiert bereitgestellt. Im Fall einer Bereitstellung des Messwerts (MW) als Analogsignal ist ein Analog/Digital-Umsetzer vorgesehen, der entweder im Sensor 12 oder im Slave SL angeordnet ist. Der Messwert MW wird in einer Daten-Bereithaltungsanordnung 14 hinterlegt und zur späteren Datenübertragung bereitgestellt. Die Daten-Bereithaltungsanordnung 14 gibt Datenbits DB aus, die einer Datensignal-Ausblendanordnung 16 zur Verfügung gestellt werden, der weiterhin ein erstes und zweites Wartesignal Tm_W1, Tm_W2 sowie ein Statussignal St zugeführt werden und die ein Datensignal DAT bereitstellt, das zum Master MA geführt ist.

Der Master MA gibt ein Taktsignal CLK aus, das zum Slave SL geführt ist und im Slave SL einer Taktzyklusdauer-Ermittlung 18, einem Timeout-Zeitgeber 20, einer ersten Freischaltanordnung 22, einem Übertaktungs-Zeitgeber 24, einer zweiten Freischaltanordnung 28, einer Taktzyklen-Ermittlung 30 sowie der Daten-Bereithaltungsanordnung 14 zur Verfügung gestellt wird.

Im Timeout-Zeitgeber 20 tritt ein Timeout-Zeitgeber-Zählsignal To und im Übertaktungs-Zeitgeber 24 ein Übertaktungs-Zeitgeber-Zählsignal Tm auf. Beide Zeitgeber 20, 24 sind als Countdown-Zähler mit den Zählsignalen To, Tm realisiert, die bei Ablauf der Zählsignalen To, Tm, also dem Zählwert null, ein Timeout-Ereignis To_E beziehungsweise ein Übertaktungs-Ereignis Tm_E auslösen.

Die Taktzyklusdauer-Ermittlung 18 stellt ein Taktzyklusdauersignal TCLK dem Timeout-Zeitgeber 20 und dem Übertaktungs-Zeitgeber 24 zur Verfügung. Im Timeout-Zeitgeber 20 kann ein Timeout-Signal To auftreten. Der Timeout-Zeitgeber 20 stellt ein Timeout-Ereignis To_E bereit, das einer Taktzyklenanzahl-Ermittlung 30, dem Übertaktungs-Zeitgeber 24 und einer dritten Freischaltanordnung 34 zur Verfügung gestellt wird.

Die Taktzyklenanzahl-Ermittlung 30, der neben dem Timeout-Ereignis To_E das Übertaktungs-Ereignis Tm_E sowie ein von einem Taktzyklen-Ermittlung-Wiederholungszähler 32 bereitgestelltes erstes Freigabesignal FG zur Verfügung gestellt wird, stellt dem Taktzyklen-Ermittlung-Wiederholungszähler 32 ein Zählsignal Z, der Datensignal-Ausblendanordnung 16 das Statussignal St, dem Timeout-Zeitgeber 20 ein Resetsignal R und der ersten Freischaltanordnung 22 eine Taktzyklenanzahl AZ zur Verfügung.

Die erste Freischaltanordnung 22 stellt dem Übertaktungs-Zeitgeber 24 ein Startsignal S zur Verfügung. Der Übertaktungs-Zeitgeber 24 stellt das Übertaktungs-Ereignis Tm_E weiterhin noch der zweiten Freischaltanordnung 28 und dritten Freischaltanordnung 34 zur Verfügung.

Der Master MA enthält eine Datensignal-Bewertung 36, die ein Taktzyklensignal D bereitstellt.

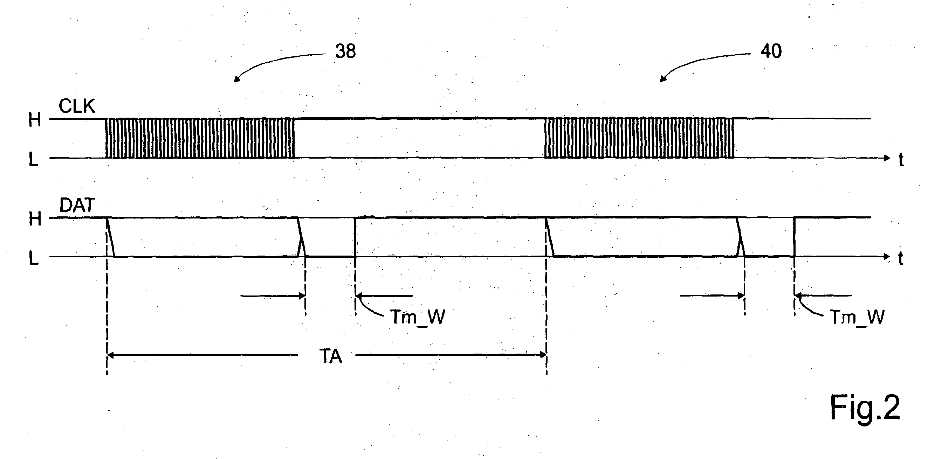

Die beschriebene Messwert-Übertragungsanordnung 10 arbeitet folgendermaßen:
Zunächst werden anhand von Figur 2 das Taktsignal CLK sowie das Datensignal DAT näher erläutert, wobei vorausgesetzt wird, dass sowohl der Master MA als auch der Slave SL die Anzahl der zu übertragenden Datenbits bereits kennen, die Adaption demnach bereits abgeschlossen ist.

Der Master MA fordert mittels des Taktsignals CLK die Datenbits eines von einem bestimmten Slave SL bereitgestellten Messwerts MW an. Hierzu sendet der Master an den betreffenden Slave SL einen Taktburst, welcher eine vorgegebene Anzahl von Taktzyklen aufweist. In Figur 2 ist die vorgegebene Anzahl von Taktzyklen aufgrund der Vielzahl von Taktzyklen während eines Taktbursts 38, 40 nur dicht gedrängt darstellbar. In der Praxis können Bitbreiten von beispielsweise 16 bis beispielsweise 32 Bit auftreten. Die Anzahl der Datenbits DB wird im Folgenden mit n bezeichnet.

Als Sensor 12 ist beispielsweise ein Positionssensor vorgesehen. Ein solcher Sensor 12 kann einen hoch aufgelösten Messwert MW mit einer Datenbitbreite von beispielsweise 16 bis 24 bit bereitstellen.

Vorzugsweise stellen der Sensor 12 beziehungsweise die Daten-Bereithaltungsanordnung 14 die zu übertragenden Datenbits DB im Binär-Code bereit.

Für die Übertragung von n Datenbits werden bei der zugrunde liegenden synchronen seriellen Datenübertragung n+1 Taktzyklen vorausgesetzt. Im Ruhezustand liegt das Taktsignal CLK beispielhaft auf dem H-Pegel H. Während der Taktbursts 38, 40 findet die Übertragung des Datensignals DAT statt, wobei die Datenbits im Rahmen des Datensignals DAT seriell Bit für Bit vom Slave SL zum Master MA übertragen werden. Auch hier wird beispielhaft vom H-Pegel H des Datensignals DAT im Ruhezustand ausgegangen.

Nach Abschluss der Datenübertragung innerhalb eines Taktbursts 38, 40 wird mittels des Datensignals DAT eine Wartezeit Tm_W vorgegeben. Die Wartezeit Tm_W kann auch als Verriegelungszeit bezeichnet werden. Während der Wartezeit Tm_W wird das Datensignal DAT auf L-Pegel gehalten. Der L-Pegel wird vom Master MA im Anschluss an die Datenübertragung während des Taktbursts 38, 40 erkannt. Die Wartezeit Tm_W signalisiert dem Master MA, dass der Slave SL noch nicht für eine weitere Datenübertragung der Datenbits DB eines neueren Messwerts MW bereit ist. Die kurzzeitige Verriegelung der Datenübertragung stellt sicher, dass im Slave SL die Datenbits DB eines definierten Messwerts MW zu Beginn eines Taktbursts 38, 40 gespeichert werden können. Frühestens nach Ablauf der Wartezeit Tm_W fordert der Master MA die Datenbits DB eines neuen Messwerts MW mittels eines neuen Taktbursts 40 an.

Die Zeit von Taktburst zu Taktburst 38, 40 ist in Figur 2 als Abfragezeit TA eingetragen. Sofern eine periodische oder quasiperiodische Datenübertragung vom Master MA veranlasst wird, kann die Abfragezeit TA auch als Periodendauer bezeichnet werden.

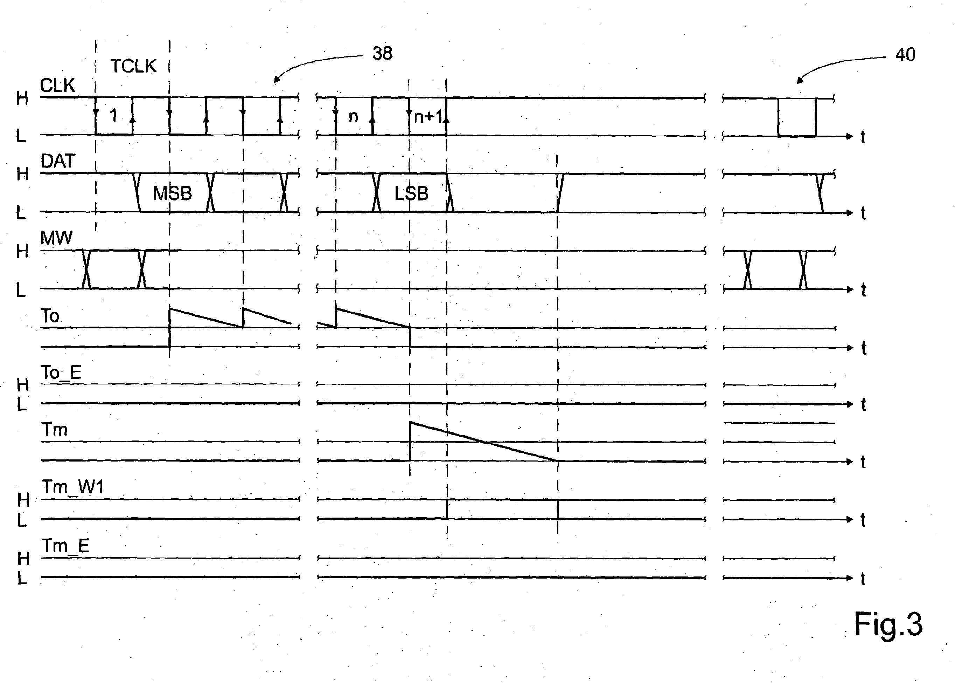

Figur 3 zeigt einen Signalaustausch zwischen dem Master MA und einem ausgewählten Slave SL der Messwert-Übertragungsanordnung 10, bei bereits bekannter Anzahl n+1 von Taktzyklen beziehungsweise bei bereits bekannter Anzahl n von zu übertragenden Datenbits DB eines Messwerts MW sowohl im Master MA als auch im Slave SL. Die beschriebene Situation tritt nach einer erfolgreich abgeschlossenen Adaption auf.

Dargestellt ist zunächst das Taktsignal CLK, das während eines Taktbursts 38, 40 eine bestimmte Takt-Periodendauer TCLK aufweist. Die Takt-Periodendauer TCLK kann entweder fest vorgegeben sein oder auch innerhalb weiter Grenzen variabel vom Master MA festgelegt werden. Für den Fall, dass die Takt-Periodendauer TCLK variabel ausgestaltet wird, ermittelt die Takt-Periodendauer-Ermittlung 18 im Slave SL die aktuelle Takt-Periodendauer TCLK, speichert den Wert und stellt die ermittelte Takt-Periodendauer TCLK sowohl dem Timeout-Zeitgeber 20 als auch dem Übertaktungs-Zeitgeber 24 zur Verfügung.

Der Timeout-Zeitgeber 20 und der Übertaktungs-Zeitgeber 24 können die jeweils ihren Zeitgebern zugrunde liegenden Zeiten in Abhängigkeit von der Takt-Periodendauer TCLK festlegen oder bei fester Taktperiodendauer TCLK auf fest vorgegebene Zeiten eingestellt sein. Die Zeiten sowohl des Timeout-Zeitgebers 20 als auch des Übertaktungs-Zeitgebers 24 liegen im Bereich von 1,5 x TCLK bis 2,5 x TCLK, vorzugsweise bei 2 x TCLK.

Im Ruhezustand ohne Taktsignal CLK kann das Taktsignal CLK wieder beispielsweise H-Pegel aufweisen. Das Taktsignal CLK weist n+1 Taktzyklen auf, die zur Übertragung von n Datenbits DB eines Messwerts MW vorgesehen sind.

Die erste fallende Flanke des Taktsignals CLK sorgt dafür, dass die Daten-Bereithaltungsanordnung 14 den vom Sensor 12 aktuell bereitgestellten, bereits in digitaler Form vorliegenden Messwert MW speichert und für die folgende Datenübertragung bereithält. Hierbei kann die Bereitstellungsrate der einzelnen Messwerte MW vom Sensor 12 erheblich von der weiteren Signalverarbeitung im Slave SL abweichen. Die Rate kann entweder langsamer oder schneller sein als die Takt-Periodendauer TCLK. Wesentlich ist nur, dass der aktuell vorliegende Messwert MW mit einer Taktflanke, im Beispiel der ersten fallenden Taktflanke in der Daten-Bereithaltungsanordnung 14 gespeichert wird.

Mit der ersten steigenden Taktflanke des Taktsignals CLK stellt die Daten-Bereithaltungsanordnung 14 das erste Datenbit DB bereit. Vorzugsweise handelt es sich hierbei um das höchstwertige Bit (Most Significant Bit (MSB)). Mit jeder weiteren steigenden Taktflanke wird das nächste Datenbit DB bereitgestellt. Mit der vorletzten steigenden Taktflanke des Taktzyklus n+1 wird das niederwertigste Bit (Least Significant Bit (LSB)) bereitgestellt. Die Datenbits DB werden über die Datensignal-Ausblendanordnung 16 geleitet und als Datensignal DAT zum Master MA übertragen. Die Datensignal-Ausblendanordnung 14 beeinflusst bis zur letzten steigenden Taktflanke des letzten Taktzyklus n+1 die zu übertragenden Datenbits DB nicht.

Mit der zweiten steigenden Taktflanke wird der Timeout-Zeitgeber 20 getriggert, der intern das Timeout-Signal To erzeugt, dessen Dauer - wie bereits beschrieben - vorzugsweise 2 x TCLK beträgt. Mit jeder weiteren fallenden Taktflanke wird der Timeout-Zeitgeber 20 erneut getriggert.

Die Anzahl n+1 der Taktzyklen beziehungsweise die Anzahl der zu übertragenden Datenbits DB ist bekannt und in der Taktzyklen-Ermittlung 30 gespeichert. Die Anzahl n+1 wird der ersten Freischaltanordnung 22 zur Verfügung gestellt, welche mit dem Startsignal S dafür sorgt, dass der Übertaktungs-Zeitgeber 24 bis zur n-ten steigenden Taktflanke nicht getriggert und erst mit der letzten fallenden Taktflanke getriggert wird. Im Übertaktungs-Zeitgeber 24 tritt ab der Triggerung das Übertaktungs-Zeitgeber-Zählsignal Tm auf, dessen Dauer auf vorzugsweise wieder 2 x die Takt-Periodendauer TCLK festgelegt ist.

Das Resetsignal R der Taktzyklen-Ermittlung 30 schaltet den Timeout-Zeitgeber 20 ab, sodass das in Figur 3 gezeigte Timeout-Ereignis To_E nicht auftritt.

Die zweite Freischaltanordnung 28 sorgt dafür, dass mit der nächsten steigenden Taktflanke, die zugleich die letzte Taktflanke des Taktbursts 38 ist, das in Figur 3 gezeigte Wartesignal Tm_W1 bereitgestellt wird. Das Wartesignal Tm_W1 veranlasst die Daten-Ausblendanordnung 16 dazu, an ihrem Ausgang während des Vorliegens des Wartesignals Tm_W1 einen vorgegebenen Pegel einzunehmen. Im gezeigten Ausführungsbeispiel ist dies der L-Pegel.

Anhand des nach Abschluss der Übertragung der Datenbits DB folgenden Warte-Signalpegels des Datensignals DAT, welchen die Daten-Ausblendanordnung 16 während der Wartezeit Tm_W vorgibt, erkennt der Master MA den Verrieglungszustand und wartet entsprechend mit der Aussendung des nächsten Taktbursts 40.

Bei bekannter Anzahl n+1 von Taktzyklen eines Taktbursts 38, 40 beziehungsweise bei bekannter Anzahl n von zu übertragenden Datenbits DB, tritt im Slave SL weder ein Timeout-Ereignis To_E noch ein Übertaktungs-Ereignis Tm_E auf. Von diesem Fall wird bei der in Figur 3 dargestellten Situation ausgegangen.

Der Master MA fordert vom Slave SL mit der Ausgabe des nächsten Taktbursts 40 die Übertragung der Datenbits DB eines neuen Messwerts MW an.

Aufgrund der Arbeitsweise wird die Datenübertragung in der Messwert-Übertragungsanordnung 10 als synchrone serielle Datenübertragung beziehungsweise als "Synchronous Serial Interface (SSI)" bezeichnet.

Erfindungsgemäß ist vorgesehen, dass die Anzahl n der zu übertragenden Datenbits DB beziehungsweise die Anzahl n+1 der hierfür erforderlichen Taktzyklen adaptiv festgelegt wird, wobei entweder der Master MA die Anzahl vorgibt und der Slave SL die Adaption vornimmt oder der Slave SL die Anzahl vorgibt und der Master MA adaptiert.

Zunächst wird davon ausgegangen, dass der Master MA die Anzahl n+1 der Taktzyklen vorgibt und der Slave SL die korrespondierende Anzahl n der zu übertragenden Datenbits DB erst ermitteln muss.

Gemäß einem ersten Ausführungsbeispiel ist vorgesehen, dass die Taktzyklen-Ermittlung 30 im Slave SL bei der Inbetriebnahme der Daten-Übertragungsanordnung 10 oder bei einer neuen Anschaltung des Slaves SL an ein bestehendes System zunächst die Anzahl n+1 der Taktzyklen beziehungsweise die Anzahl n der zu übertragenden Datenbits DB ermittelt.

Während der Ermittlung der Anzahl n+1 stellt die Taktzyklen-Ermittlung 30 das Statussignal St bereit. Das Statussignal St kann in der Datensignal-Ausblendanordnung 16 die Ausgabe eines Statuswerts veranlassen, bei dem beispielsweise sämtliche Datenbits DB auf logisch 1 gesetzt werden.

Rein prinzipiell würde die Ermittlung der Anzahl n+1 der Taktzyklen während eines Taktbursts 38, 40 ausreichen. Zur Absicherung des Ergebnisses kann jedoch vorteilhafterweise eine Verifikation vorgesehen sein. Hierzu stellt die Taktzyklen-Ermittlung 30 nach jeder Ermittlung der Anzahl n+1 das Zählsignal Z bereit, das im Taktzyklen-Ermittlung-Wiederholungszähler 32 gezählt wird. Erst dann, wenn eine vorgegebene Anzahl von Ermittlungen durchgeführt wurden, stellt der Taktzyklen-Ermittlung-Wiederholungszähler 32 das Freigabesignal FG bereit, welches die Taktzyklen-Ermittlung 30 zum Vergleich sämtlicher gespeicherten Werte für die Anzahl n, n+1 veranlasst. Nur dann, wenn sämtliche gespeicherte Anzahlen n, n+1 übereinstimmen, wird davon ausgegangen, dass die Anzahl n+1 der Taktzyklen in einem Taktburst 38, 40 beziehungsweise die Anzahl n der zu übertragenden Datenbits DB richtig ermittelt wurde.

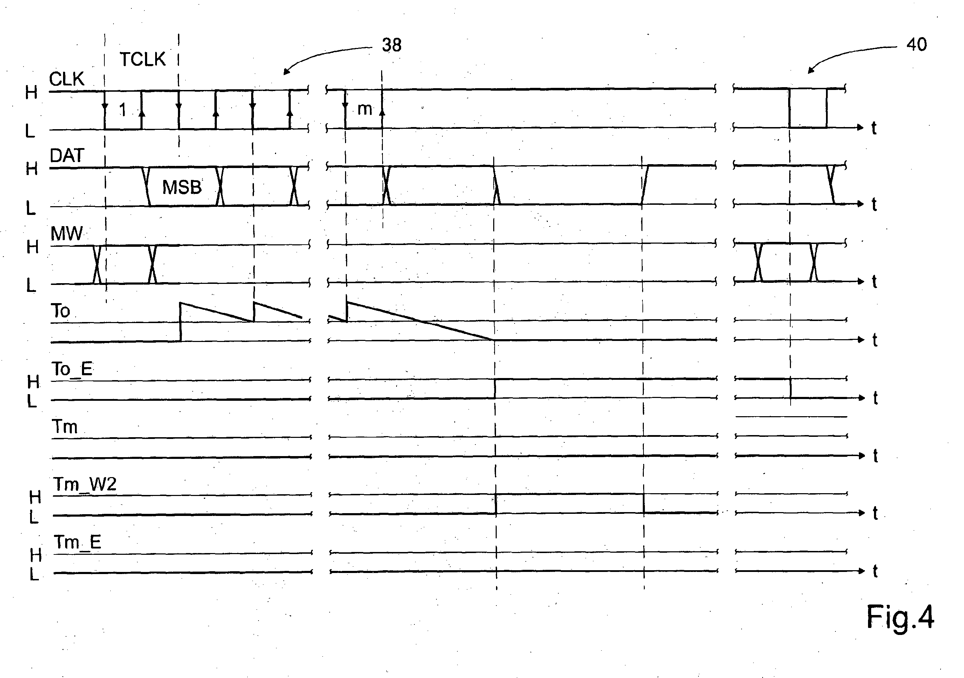

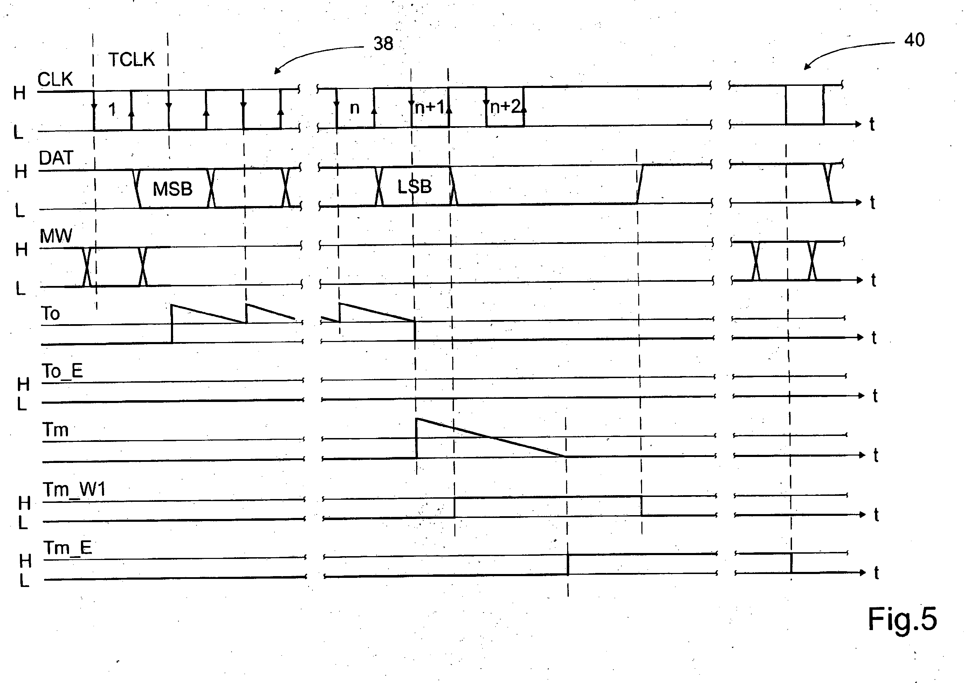

Gemäß einem anderen Ausführungsbeispiel, das anhand von den in Figur 4 und Figur 5 gezeigten Signalverläufen erläutert wird, ist eine andere Vorgehensweise bei der Adaption vorgesehen. Bereits während der Adaption findet eine Bereitstellung des Datensignals DAT statt. Vorausgesetzt wird, dass der Slave SL eine Anzahl n von zu übertragenden Datenbits DB vorab annimmt, wobei die Anzahl n in der Taktzyklen-Ermittlung 30 gespeichert ist.

Mit Blick auf die in Figur 4 gezeigten Signalverläufe wird zunächst von einer Untertaktung ausgegangen, bei welcher die Anzahl n+1 der vom Master MA bereitgestellten Taktzyklen geringer ist als vom Slave SL angenommen.

Mit dem Auftreten der ersten Taktflanke des Taktsignals CLK eines Taktbursts 38, 40 wird wieder der vom Sensor 12 bereitgestellte aktuelle, bereits digitalisierte Messwert MW in der Daten-Bereithaltungsanordnung 14 gespeichert und zur seriellen bitweisen Übertragung der einzelnen Datenbits DB bereit gehalten.

Die weiteren Abläufe stimmen zunächst ebenfalls mit denen überein, die bei bekannter Anzahl n+1 der Taktzyklen beziehungsweise bekannter Anzahl der zu übertragenden Datenbits DB auftreten bis einschließlich des letzten Taktzyklus.

Der Timeout-Zeitgeber 20 wird wieder mit der zweiten, gegebenenfalls fallenden Taktflanke getriggert. Mit der letzten fallenden Taktflanke wird der Timeout-Zeitgeber 20 letztmalig getriggert. Die Datenübertragung bleibt nach dem letzten Taktzyklus gewissermaßen stehen, weil die Daten-Bereitstellungsanordnung 14 nicht mehr getaktet wird.

Die erste Freischaltanordnung 22 erkennt jetzt nicht die erwartete vorletzte steigende Taktflanke und kann infolgedessen den Übertaktungs-Zeitgeber 24 mit dem Startsignal S nicht starten.

Der Timeout-Zeitgeber 20 wird weiterhin bis zum letzten Taktzyklus mit den fallenden Flanken des Taktsignals CLK getriggert. Da jetzt der Timeout-Zeitgeber 20 nicht mit dem Übertaktungs-Signal Tm des Übertaktungs-Zeitgebers 24 abgeschaltet wird, signalisiert der Timeout-Zeitgeber 20 mit einem Timeout-Ereignis To_E die nicht vorhandenen, aber erwarteten weiteren Taktzyklen. Das Timeout-Ereignis To_E wegen fehlender Taktzyklen signalisiert der Timeout-Zeitgeber 20 mit dem Bereitstellen des Timeout-Ereignisses To_E nach dem Ablauf der vom Timeout-Zeitgeber 20 vorgegebenen Zeitdauer, die - wie bereits beschrieben ― vorzugsweise auf 2 x die Taktzyklusdauer TCLK festgelegt sein kann.

Das Timeout-Ereignis To_E veranlasst die Taktzyklen-Ermittlung 30 zur Verringerung der angenommen Anzahl n+1 der Taktzyklen eines Taktbursts 38, 40 beziehungsweise der angenommenen Anzahl n der zu übertragenden Datenbits DB.

Das Timeout-Ereignis To_E triggert den Übertaktungs-Zeitgeber 24, der daraufhin das Übertaktungs-Signal Tm bereitstellt. Die dritte Freischaltanordnung 34, der sowohl das Timeout-Ereignis To_E als auch das Übertaktungs-Signal Tm zur Verfügung gestellt werden, stellt das zweite Wartesignal Tm_W2 bereit, welches einerseits die gewissermaßen stehen gebliebene Datenübertragung eines Datenbits DB beendet und anschließend das Datensignal DAT auf dem vorgegebenen Pegel, beispielsweise dem L-Pegel für die vom Übertaktungs-Zeitgeber 24 vorgegebene Zeitdauer, vorzugsweise 2 x Taktzyklen-Dauer TCLK, festhält, die dem Master MA signalisieren, dass der Slave SL für eine weitere Anfrage im Rahmen eines folgenden Taktbursts 40 noch nicht bereit ist.

Dieser Vorgang, bei dem der Timeout-Zeitgeber 20 einen Timeout aufgrund des zu frühen Wegfalls von Taktzyklen erzeugt und mit dem Auftreten eines Timeout-Ereignisses To_E signalisiert, wiederholt sich solange, bis die Taktzyklen-Ermittlung 30 die korrekte Anzahl n+1 an Taktzyklen beziehungsweise korrekte Anzahl n von zu übertragenden Datenbits DB des Messwerts MW ermittelt hat.

Nunmehr wird von einer Übertaktung ausgegangen, bei welcher die Anzahl n+1 der vom Master MA bereitgestellten Taktzyklen höher ist als die vom Slave SL angenommene, in der Taktzyklen-Ermittlung 30 hinterlegte Anzahl, wobei davon ausgegangen wird, dass diese Anzahl n+1 beträgt.

Die Signalverläufe sind in Figur 5 detailliert dargestellt. Mit dem Auftreten der ersten Taktflanke des Taktsignals CLK eines Taktbursts 38, 40 wird wieder der vom Sensor 12 bereitgestellte aktuelle, bereits digitalisierte Messwert MW in der Daten-Bereithaltungsanordnung 14 gespeichert und zur seriellen bitweisen Übertragung bereitgehalten.

Die Signalverläufe entsprechen bis zum Auftreten des Taktzyklus n+1 denen eines adaptierten Zustands. Aufgrund des Auftretens der angenommenen letzten fallenden Taktflanke zu Beginn des Taktzyklus n+1 wird der Übertaktungs-Zeitgeber 24 gestartet, der den Timeout-Zeitgeber 20 abschaltet. Ein Timeout-Ereignis To_E kann daher nicht auftreten. Mit der irrtümlich angenommenen letzten steigenden Taktflanke stellt die zweite Freischaltanordnung 28 das erste Wartesignal Tm_W1 bereit. Das Datensignal DAT wird dadurch auf dem Wartepegel gehalten. Dadurch bedingt, dass jedoch die unerwarteten weiteren Taktzyklen n+2 und gegebenenfalls weitere Taktzyklen folgen, stellt die Übertaktungs-Ereignis-Ermittlung 26 das Übertaktungs-Ereignis Tm_E bereit, welches eine Übertaktung signalisiert und welches die Taktzyklen-Ermittlung 30 verlasst, die gespeicherte Anzahl von Taktzyklen beziehungsweise die Anzahl von zu übertragenden Datenbits DB um eins zu erhöhen.

Die weiteren fallenden Taktflanken retriggern ständig den Übertaktungs-Zeitgeber 24, sodass sich auch die erste Wartezeit Tm_W1 entsprechend verlängert und das Datensignal DAT weiterhin auf dem Wartepegel gehalten wird.

Prinzipiell kann gemäß einer Ausgestaltung ein nicht näher gezeigter Übertaktungs-Ereigniszähler vorgesehen sein, der bei weiterhin vorliegenden Taktzyklen des Taktsignals CLK und bei gleichzeitig vorhandenem Übertaktungs-Ereignis Tm_E bei jeder vorgegebenen Taktflanke die Anzahl der überzähligen Taktzyklen zählt. Der Obertaktungs-Ereigniszähler kann dann bei jedem weiteren Takt ein dem Übertaktungs-Ereignis Tm_E entsprechendes Signal der Taktzyklenermittlung 30 zur Verfügung stellt, welche die Anzahl der Taktzyklen beziehungsweise die Anzahl der zu übertragenden Datenbits DB des Messwerts MW jedes Mal erhöht.

Alternativ kann der Übertaktungs-Ereigniszähler selbst die Anzahl der überzähligen Taktzyklen zählen und das Endergebnis der Taktzyklen-Ermittlung 30 mitteilen, welche die Anzahl der Taktzyklen beziehungsweise die Anzahl der zu übertragenden Datenbits DB des Messwerts MW in einem Schritt auf den richtigen Wert erhöht.

Mittels des Übertaktungs-Ereigniszählers kann die richtige Anzahl der Taktzyklen beziehungsweise die Anzahl der zu übertragenden Datenbits DB des Messwerts MW innerhalb eines Taktbursts 38, 40 ermittelt und die Adaption bereits abgeschlossen werden.

Nunmehr wird davon ausgegangen, dass der Slave SL die Anzahl n der zu übertragenden Datenbits DB vorgibt und der Master MA die korrespondierende Anzahl n+1 von Taktzyklen erst ermitteln muss.

Hierzu veranlasst der Master MA eine Datenübertragung durch Bereitstellung des Taktsignals CLK, wobei eine vom Master MA vermutete Anzahl von Taktzyklen bereitgestellt wird. Dem Master MA muss die Dauer der Wartezeit Tm_W1, Tm_W2 bekannt sein.

Bei einer Untertaktung gemäß Figur 4 schließt sich die zweite Wartezeit Tm_W2 an das Auftreten des Timeout-Ereignisses To_E an, wobei zuvor die Übertragung des letzten Datenbits DB des Messwerts MW noch nicht abgeschlossen ist. Die Datensignalbewertung 36 im Master MA erkennt die scheinbare Verlängerung der Wartezeit Tm_W2 und schließt daraus, dass eine Untertaktung vorliegt. Daraufhin erhöht der Master MA die Anzahl der Taktzyklen.

Bei einer Übertaktung gemäß Figur 5 ist aufgrund der mit den überzähligen Taktzyklen verbundene jeweils erneute Triggerung des Übertaktungs-Zeitgebers 24 ebenfalls mit einer Verlängerung der Wartezeit Tm_W1 zu rechnen. Aufgrund des Wegfalls des Timeout-Ereignisses To_E unmittelbar am Ende der Übertragung des letzten Datenbits DB, wird das Datensignal DAT bereits während des noch ausgegebenen Taktsignals CLK auf dem Warte-Signalpegel L gehalten. Dadurch tritt der Warte-Signalpegel L des Datensignals DAT auf, während gleichzeitig noch Taktzyklen bereitgestellt werden. Die Datensignal-Bewertung 36 im Master MA kann deshalb die Übertaktung erkennen und entsprechend eine Verminderung der Anzahl der bereitgestellten Taktzyklen vornehmen. Die Datensignal-Bewertung 36 stellt das Taktzyklensignal D bereit, welches die Anzahl der vorzugebenden Taktzyklen in einem Taktburst 38, 40 direkt widerspiegelt.

Die Funktionen des Slaves SL und des Masters MA laufen in einer signalverarbeitenden Anordnung ab, die vorzugsweise als ASIC realisiert ist. Die Funktionen werden im Rahmen eines Programms realisiert, das im ASIC abläuft.

## Patentansprüche

1. Verfahren zur seriellen Datenübertragung von wenigstens einem Slave (SL), der die Datenbits (DB) eines von wenigstens einem Sensor (12) erfassten Messwerts (MW) zur bitweisen seriellen Übertragung zu einem Master (MA) bereitstellt, und bei dem der Master (MA) einen Messwert (MW) vom Slave (SL) mittels eines Taktbursts (38, 40) anfordert, der mehrere Taktzyklen (TCLK) aufweist, deren Anzahl auf die Anzahl der zu übertragenden Datenbits (DB) abgestimmt ist, **dadurch gekennzeichnet, dass** die Anzahl der vom Slave (SL) zum Master (MA) zu übertragenden Datenbits (DB) im Slave (SL) anhand der vom Master (MA) vorgegebenen Anzahl von Taktzyklen (TCLK) eines vom Master (MA) an den Slave (SL) übertragenen Taktbursts (38, 40) im Slave (12) adaptiv ermittelt und festgelegt wird.

2. Verfahren nach Anspruch 1, **dadurch gekennzeichnet, dass** der Slave (SL) die Anzahl der Taktzyklen (TCLK) in einem Taktburst (38, 40) zählt und in Abhängigkeit vom Zählergebnis die Anzahl der zu übertragenden Datenbits (DB) festlegt.

3. Verfahren nach Anspruch 2, **dadurch gekennzeichnet, dass** der Slave (SL) die Anzahl der übertragenden Datenbits (DB) erst dann festlegt, wenn der Slave (SL) mehrfach dieselbe Anzahl von Taktzyklen (TCLK) eines Taktbursts (38, 40) ermittelt hat.

4. Verfahren nach Anspruch 1, **dadurch gekennzeichnet, dass** der Slave (SL) von einer angenommenen Anzahl von Taktzyklen eines Taktbursts (38, 40) ausgeht, dass das Auftreten von Taktflanken des Taktsignals (CLK) von einem Timeout-Zeitgeber (20) überwacht wird, dass bei einer Untertaktung, bei welcher der Master (MA) eine geringere Anzahl von Taktzyklen als vom Slave (SL) erwartet in einem Taktburst (38, 40) bereitstellt, aufgrund des Ausbleibens von wenigstens einer weiteren Taktflanke ein Timeout-Ereignis (To_E) bereitgestellt und bei einem Auftreten eines Timeout-Ereignisses (To_E) die Anzahl der erwarteten Taktzyklen im Slave (SL) vermindert wird.

5. Verfahren nach Anspruch 1, **dadurch gekennzeichnet, dass** der Slave (SL) von einer angenommenen Anzahl von Taktzyklen eines Taktbursts (38, 40) ausgeht, dass das Auftreten von Taktflanken des Taktsignals (CLK) von einem Übertaktungs-Zeitgeber (24) überwacht wird, dass bei einer Übertaktung, bei welcher der Master (MA) eine höhere Anzahl von Taktzyklen als vom Slave (SL) erwartet in einem Taktburst (38, 40) bereitstellt, aufgrund der weiterhin auftretenden wenigstens einen Taktflanke ein Übertaktungs-Ereignis (Tm_E) bereitstellt und bei einem Auftreten eines Übertaktungs-Ereignisses (Tm_E) die Anzahl der erwarteten Taktzyklen erhöht wird.

6. Verfahren nach Anspruch 5, **dadurch gekennzeichnet, dass** ein Übertaktungs-Ereigniszähler die über der erwarteten Anzahl von Taktzyklen liegenden Anzahl von Taktzyklen eines Taktbursts (38, 40) zählt und dass die Anzahl der vom Master (MA) überzählig vorgegebenen Taktzyklen innerhalb eines Taktbursts (38, 40) ermittelt wird und daraus die Anzahl der zu übertragenden Datenbits (DB) des Messwerts (MW) festgelegt wird.

7. Verfahren nach Anspruch 1, **dadurch gekennzeichnet, dass** der Master (MA) die Taktzyklendauer (TCLK) variabel festlegt und dass der Slave (SL) die Taktzyklendauer (TCLK) mit einer Taktzyklendauer-Ermittlung (18) ermittelt.

8. Verfahren nach Anspruch 4 und 5, **dadurch gekennzeichnet, dass** eine Zeitgeberzeit des Timeout-Zeitgebers (20) und eine Zeitgeberzeit des Übertaktungs-Zeitgebers (24) in Abhängigkeit von der ermittelten Taktzyklendauer (TCLK) festgelegt werden.

9. Verfahren nach Anspruch 8, **dadurch gekennzeichnet, dass** die Zeiten des Timeout-Zeitgebers (20) und des Übertaktungs-Zeitgebers (24) im Bereich von 1,5 bis 2,5 x der Taktzyklendauer (TCLK) festgelegt werden.

10. Verfahren nach Anspruch 9, **dadurch gekennzeichnet, dass** die Zeiten des Timeout-Zeitgebers (20) und des Übertaktungs-Zeitgebers (24) auf 2 x der Taktzyklendauer (TCLK) festgelegt werden.

11. Verfahren nach einem der vorhergehenden Ansprüche, **dadurch gekennzeichnet, dass** der Slave (SL) im Anschluss an das Ende der Übertragung der Datenbits (DB) eine Wartezeit (Tm_W, Tm_W1, Tm_W2) einfügt, während der das Datensignal (DAT) auf einem vorgegebenen Warte-Signalpegel (L) gehalten wird.

12. Verfahren zur seriellen Datenübertragung von wenigstens einem Slave (SL) zu einem Master (MA), wobei die Datenbits (DB) eines von wenigstens einem Sensor (12) erfassten Messwert (MW) zur bitweisen seriellen Übertragung vom Slave (SL) zum Master (MA) bereitgestellt werden, und bei dem der Master (MA) einen Messwert (MW) vom Slave (SL) mittels eines Taktbursts (38, 40) anfordert, der mehrere Taktzyklen (TCLK) aufweist, deren Anzahl auf die Anzahl der vom Slave (SL) zum Master (MA) zu übertragenden Datenbits (DB) abgestimmt ist, **dadurch gekennzeichnet, dass** die Anzahl der vom Slave (SL) zum Master (MA) zu übertragenden Datenbits (DB) im Slave (SL) festgelegt ist und dass der Master (MA) die Anzahl der Taktzyklen (TCLK) eines Taktbursts (38, 40) an die Anzahl der zu übertragenden Datenbits (DB) adaptiert.

13. Vorrichtung zur Durchführung des Verfahrens nach einem der Ansprüche 1 - 3, **dadurch gekennzeichnet, dass** der Slave (SL) eine Taktzyklen-Ermittlung (30) enthält, welche die Anzahl der in einem Taktburst (38, 40) enthaltenen Taktzyklen zählt und die Anzahl der zu übermittelnden Datenbits (DB) bereitstellt.

14. Vorrichtung zur Durchführung des Verfahrens nach Anspruch 4, **dadurch gekennzeichnet, dass** der Slave (SL) einen Timeout-Zeitgeber (20) zur Überwachung des Taktsignals (CLK) auf Untertaktung, einen Übertaktungs-Zeitgeber (24) zur Überwachung des Taktsignals (CLK) auf Übertaktting sowie eine Taktzyklen-Ermittlung (30) enthält, die bei einer Untertaktung die Anzahl der zu übermittelnden Datenbits (DB) vermindert und entsprechend bei einer Übertaktung die Anzahl der zu übermittelnden Datenbits (DB) erhöht.

15. Vorrichtung nach Anspruch 14, **dadurch gekennzeichnet, dass** der Slave (SL) einen Übertäktungs-Ereigniszähler aufweist, der die Anzahl aufeinanderfolgender Übertaktungs-Ereignisses (Tm_E) summiert.

16. Vorrichtung nach Anspruch 13 oder 14, **dadurch gekennzeichnet, dass** der Slave (12) eine Taktzyklendauer-Ermittlung (118) zur Ermittlung der Periodendauer (TCLK) eines Taktzyklus des Taktsignals (CLK) aufweist.

17. Vorrichtung zur Durchführung des Verfahrens nach Anspruch 11, **dadurch gekennzeichnet, dass** der Master (MA) eine Datensignal-Bewertung (36) aufweist, welche die Dauer der Wartezeit (Tm_W, Tm_W1. Tm_W2) bewertet und anhand eines Vergleichs mit einer erwarteten Dauer die Anzahl der erforderlichen Taktzyklen eines Taktbursts (38, 40) festlegt.

## Claims

1. Method for serial data transfer from at least one slave (SL), which provides the data bits (DB) of a measurement value (MW) acquired by at least one sensor (12) to a master (MA) for bit-wise serial transmission, wherein the master (MA) requests a measurement value (MW) from the slave (SL) by means of a clock burst (38, 40) that comprises several clock cycles (TCLK), with their number being adapted to the number of the data bits (DB) that are to be transferred, **characterized in that** the number of data bits (DB) to be transferred from the slave (SL) to the master (MA) is adaptively determined and defined in the slave (SL) based on the number of clock cycles (TCLK) of a clock burst (38, 40) in the slave (12) that is transferred from the master (MA) to the slave (SL) as preset by the master (MA).

2. Method according to claim 1, **characterized in that** the slave (SL) counts the number of clock cycles (TCLK) in one clock burst (38, 40) and determines the number of the data bits (DB) to be transferred depending on the count result.

3. Method according to claim 2, **characterized in that** the slave (SL) determines the number of the data bits (DB) to be transferred only after the slave (SL) has repeatedly detected the same number of clock cycles (TCLK) of one clock burst (38, 40).

4. Method according to claim 1, **characterized in that** the slave (SL) proceeds from an assumed number of clock cycles of a clock burst (38, 40), that the occurrence of clock pulse edges of the clock signal (CLK) is monitored by a time-out timer (20), that in the event of an under-clocking, in which the master (MA) provides a lower number of clock cycles in one clock burst (38, 40) than expected by the slave (SL), a time-out event (To_E) is provided due to the absence of at least one further clock pulse edge, and the number of expected clock cycles in the slave (SL) is reduced when a time-out event (To_E) occurs.

5. Method according to claim 1, **characterized in that** the slave (SL) proceeds from an assumed number of clock cycles of a clock burst (38, 40), that the occurrence of clock pulse edges of the clock signal (CLK) is monitored by an over-clocking timer (24), that in the event of over-clocking, in which the master (MA) provides a higher number of clock cycles in one clock burst (38, 40) than expected by the slave (SL), an over-clocking event (Tm_E) is provided due to the ongoing occurrence of at least one clock pulse edge, and the number of the expected clock cycles is increased when an over-clocking event (Tm_E) occurs.

6. Method according to claim 5, **characterized in that** an over-clocking event-counter counts the number of clock cycles of a clock burst (38, 40) that exceeds the expected number of clock cycles, and that the number of excess clock cycles within a clock burst (38, 40) as preset by the master (MA) is detected, and, based on that, the number of the data bits (DB) of the measurement value (MW) that are to be transferred is determined.

7. Method according to claim 1, **characterized in that** the master (MA) variably determines the clock cycle duration (TCLK), and that the slave (SL) detects the clock cycle duration (TCLK) by means of a clock cycle duration determination device (18).

8. Method according to claim 4 and 5, **characterized in that** a timer time of the time-out timer (20) and a timer time of the over-clocking timer (24) are determined depending on the detected clock cycle duration (TCLK).

9. Method according to claim 8, **characterized in that** the times of the time-out timer (20) and the over-clocking timer (24) are determined to lie within the range of 1.5 to 2.5. x the clock cycle duration (TCLK).

10. Method according to claim 9, **characterized in that** the times of the time-out timer (20) and the over-clocking timer (24) are determined to be 2 x the clock cycle duration (TCLK).

11. Method according to one of the preceding claims, **characterized in that**, following the end of the transfer of the data bits (DB), the slave (SL) inserts a waiting time (Tm_W, Tm_W1, Tm_W2), during which the data signal (DAT) is maintained at a predetermined waiting signal level (L).

12. Method for serial data transfer from at least one slave (SL) to a master (MA), wherein the data bits (DB) of a measurement value (MW) acquired by at least one sensor (12) are provided for bit-wise serial transfer from the slave (SL) to a master (MA), and in which the master (MA) requests a measurement value (MW) from the slave (SL) by means of a clock burst (38, 40), which has several clock cycles (TCLK), with their number being adapted to the number of the data bits (DB) that are to be transferred from the slave (SL) to the master (MA), **characterized in that** the number of data bits (DB) to be transferred from the slave (SL) to the master (MA) is determined in the slave (SL) and that the master (MA) adapts the number of clock cycles (TCLK) of a clock burst (38, 40) to the number of the data bits (DB) to be transferred.

13. Device for executing the method according to one of claims 1 - 3, **characterized in that** the slave (SL) comprises a clock cycle determining device (30), which counts the number of the clock cycles contained in a clock burst (38, 40) and provides the number of data bits (DB) that are to be transferred.

14. Device for executing the method according to claim 4, **characterized in that** the slave (SL) comprises a time-out timer (20) for monitoring the clock signal (CLK) for under-clocking, an over-clocking timer (24) for monitoring the clock signal (CLK) for over-clocking, as well as a clock cycle determining device (30) by which the number of data bits (DB) to be transferred is decreased in the event of under-clocking, and correspondingly the number of data bits (DB) to be transferred is increased in the event of over-clocking.

15. Device according to claim 14, **characterized in that** the slave (SL) comprises an over-clocking event counter, which adds the number of successive over-clocking events (Tm_E).

16. Device according to claim 13 or 14, **characterized in that** the slave (12) comprises a clock cycle duration determining device (18) for determining the cycle duration (TCLK) of a clock cycle of the clock signal (CLK).

17. Device for executing the method according to claim 11, **characterized in that** the master (MA) comprises a data signal assessment device (36) which assesses the duration of the waiting time (Tm_W, Tm_W1, Tm_W2) and determines the number of the necessary clock cycles of a clock burst (38, 40) based on the comparison to an expected duration.

## Revendications

1. Procédé de transmission sérielle de données d'au moins un esclave (SL) qui fournit les bits de données (DB) d'une valeur de mesure (MW) détectée par au moins un capteur (12) pour permettre leur transmission sérielle bit par bit à un maître (MA), et selon lequel le maître (MA) demande une valeur de mesure (MW) à l'esclave (SL) au moyen d'une rafale d'horloge (38, 40) qui comporte plusieurs cycles d'horloge (TCLK), dont le nombre est adapté au nombre des bits de données (DB) à transmettre,
**caractérisé en ce que**
le nombre des bits de données (DB) devant être transmis de l'esclave (SL) au maitre (MA) est déterminé et fixé de manière adaptative dans l'esclave (SL) sur le fondement du nombre de cycles d'horloge (TCLK) prédéfini par le maître (MA) d'une rafale d'horloge (38, 40) transmise du maître (MA) à l'esclave (SL).

2. Procédé conforme à la revendication 1,
**caractérisé en ce que**
l'esclave (SL) compte le nombre de cycles d'horloge (TCLK) dans une rafale d'horloge (38, 40) et en fonction du résultat de ce comptage fixe le nombre de bits de données (DB) à transmettre.

3. Procédé conforme à la revendication 2,
**caractérisé en ce que**
l'esclave (SL) ne fixe le nombre de bits de données (DB) à transmettre que lorsque cet esclave (SL) a déterminé plusieurs fois le même nombre de cycles d'horloge (TCLK) d'une rafale d'horloge (38, 40).

4. Procédé conforme à la revendication 1,
**caractérisé en ce que**
l'esclave (SL) part d'un nombre supposé de cycles d'horloge d'une rafale d'horloge (38, 40), l'apparition de fronts d'horloge du signal d'horloge (CLK) est surveillée par un synchroniseur de temporisation (20), en présence d'un sous-cadencement pour lequel le maître (MA) a fourni dans une rafale d'horloge (38, 40) un nombre inférieur de cycles d'horloge que celui qui était attendu par l'esclave, en raison de l'absence d'au moins un autre front d'horloge, un événement de temporisation (To_E) est fourni et en présence d'un événement de temporisation (To_E) le nombre de cycles d'horloge attendu dans l'esclave (SL) est diminué.

5. Procédé conforme à la revendication 1,
**caractérisé en ce que**
l'esclave (SL) part d'un nombre supposé de cycles d'horloge d'une rafale d'horloge (38, 40), l'apparition de fronts d'horloge du signal d'horloge (CLK) est surveillée par synchroniseur de sur-cadencement (24), en présence d'un sur-cadencement, pour lequel le maître (MA) a fourni dans une rafale d'horloge (38, 40) un nombre plus élevé de cycles d'horloge que celui qui était attendu par l'esclave (SL), en raison de l'arrivée d'encore au moins un front d'horloge un événement de sur-cadencement (Tm_E) est fourni, et, en présence d'un événement de sur-cadencement (Tm_E) le nombre de cycles d'horloge attendu est augmenté.

6. Procédé conforme à la revendication 5,
**caractérisé en ce que**
un compteur d'événements de sur-cadencement compte le nombre de cycles d'horloge d'une rafale d'horloge (38, 40) situés en-dessus du nombre attendu de cycles d'horloge, le nombre de cycles d'horloge prévus en surnombre par le maître (MA) dans une rafale d'horloge (38, 40), est déterminé, et, en réponse, le nombre de bits de données (DB) de la valeur de mesure (MW) devant être transmis est fixé.

7. Procédé conforme à la revendication 1,
**caractérisé en ce que**
le maître (MA) fixe de façon variable la durée des cycles d'horloge (TCLK) et l'esclave (SL) détermine la durée des cycles d'horloge (TCLK) avec un système de détermination (18) de la durée des cycles d'horloge.

8. Procédé conforme aux revendications 4 et 5,
**caractérisé en ce que**
le temps de synchronisation du synchroniseur de temporisation (20) et le temps de synchronisation du synchroniseur de sur-cadencement (24) sont déterminés en fonction de la durée des cycles d'horloge (TCLK) déterminée.

9. Procédé conforme à la revendication 8,
**caractérisé en ce que**
les temps du synchroniseur de temporisation (20) et du synchroniseur de sur-cadencement (24) sont fixés dans la plage de 1,5 à 2,5 fois la durée (TCLK) des cycles d'horloge.

10. Procédé conforme à la revendication 9,
**caractérisé en ce que**
les temps du synchroniseur de temporisation (20) et du synchroniseur de sur-cadencement (24) sont fixés à deux fois la durée (TCLK) des cycles d'horloge.

11. Procédé conforme à l'une des revendications précédentes,
**caractérisé en ce que**
l'esclave (SL) insère après la fin de la transmission des bits de données (DB) un temps d'attente (Tm_W, Tm_W1, Tm_W2) pendant lequel le signal de données (DAT) est maintenu à un niveau d'attente (L) prédéfini.

12. Procédé de transmission sérielle de données d'au moins un esclave (SL) à un maître (MA) selon lequel les bits de données (DB) d'une valeur de mesure (MW) détectée par au moins un capteur (12) sont fournis pour permettre leur transmission sérielle bit par bit de l'esclave (SL) au maître (MA), et le maître (MA) demande à l'esclave (SL) une valeur de mesure (MW) au moyen d'une rafale d'horloge (38, 40) qui comporte plusieurs cycles d'horloge (TCLK) dont le nombre est adapté au nombre des bits de données (DB) devant être transmis de l'esclave (SL) au maître (MA),
**caractérisé en ce que**
le nombre de bits de données (DB) devant être transmis de l'esclave (SL) au maître (MA) est fixé dans l'esclave (SL), et le maître (MA) adapte le nombre de cycles d'horloge (TCLK) d'une rafale d'horloge (38, 40) au nombre de bits de données (DB) devant être transmis.

13. Dispositif permettant la mise en oeuvre du procédé conforme à l'une des revendications 1 à 3,
**caractérisé en ce que**
l'esclave (SL) comprend un système de détermination de cycles d'horloge (30) qui compte le nombre de cycles d'horloge contenu dans une rafale d'horloge (38, 40) et fournit le nombre de bits de données (DB) devant être transmis.

14. Dispositif permettant la mise en oeuvre du procédé conforme à la revendication 4,
**caractérisé en ce que**
l'esclave (SL) comprend un synchroniseur de temporisation (20) pour permettre de surveiller le signal d'horloge (CLK) pour détecter un sous-cadencement, un synchroniseur de sur-cadencement (24) pour permettre de surveiller le signal d'horloge (CLK) pour détecter un sur-cadencement, ainsi qu'un système de détermination de cycles d'horloge (30) qui diminue le nombre de bits de données à transmettre (DB) en présence d'un sous-cadencement et augmente de façon correspondante le nombre de bits de données (DB) à transmettre en présence d'un sur-cadencement.

15. Dispositif conforme à la revendication 14,
**caractérisé en ce que**
l'esclave (SL) comprend un compteur d'événements de sur-cadencement qui additionne le nombre d'événements de sur-cadencement (Tm_E) successifs.

16. Dispositif conforme à la revendication 13 ou 14,
**caractérisé en ce que**
l'esclave (12) comprend un système de détermination de la durée des cycles d'horloge (18) pour permettre de déterminer la durée de la période (TCLK) d'un cycle d'horloge du signal d'horloge (CLK).

17. Dispositif permettant la mise en oeuvre du procédé conforme à la revendication 11,
**caractérisé en ce que**
le maître (MA) comprend un système d'évaluation (36) du signal de données qui évalue la durée du temps d'attente (Tm_W, Tm_W1, Tm_W2) et, sur le fondement d'une comparaison avec un durée attendue fixe le nombre des cycles d'horloge nécessaires d'une rafale d'horloge (38, 40).
